# EUROPÄISCHE PATENTSCHRIFT

(11) **EP 0 591 730 B1**
(45) Veröffentlichungstag und Bekanntmachung des Hinweises auf die Patenterteilung: **06.12.1995**
(21) Anmeldenummer: 93114900.9
(22) Anmeldetag: 16.09.1993
(51) Int. Cl.: B60R 16/02

(54) **Vorrichtung zur Signalübertragung zwischen zwei Endstellen**
Signal transmission device between two end portions
Dispositif de transmission de signaux entre deux extrémités

(30) Priorität: 08.10.1992 DE 4233914
(43) Veröffentlichungstag der Anmeldung: 13.04.1994
(73) Patentinhaber: kabelmetal electro GmbH, 30179 Hannover (DE)
(72) Erfinder: Neuner, Andreas, D-90478 Nürnberg (DE)

(56) Entgegenhaltungen:
- EP-A- 0 186 935
- EP-A- 0 243 047
- EP-A- 0 387 585
- EP-A- 0 401 028
- DE-A- 3 931 905
- US-A- 3 030 600
- US-A- 4 921 428
- US-A- 5 137 463

## Beschreibung

Die Erfindung bezieht sich auf eine Vorrichtung zur Signalübertragung zwischen zwei Endstellen, zwischen denen eine in Windungen verlaufende, einen Wickelkörper bildende und in einer im wesentlichen kreisförmigen Kassette untergebrachte Leitung angeordnet ist; an diese sind weiterführende Leitungen an den beiden Endstellen anschließbar, wobei die Länge der Leitungen wesentlich größer als der Abstand der beiden Endstellen voneinander ist und mindestens eine der beiden Endstellen relativ zu der anderen bewegbar ist. Die Kassette besteht aus einem um ihre Achse drehbaren Rotor und einem die Leitung aufnehmenden, feststehenden Stator. In dem den Wickelkörper der Leitung aufnehmenden Raum der Kassette sind der Geräuschdämmung dienende Elemente vorgesehen.

Eine derartige Vorrichtung gemäß dem Oberbegiff des Anspruchs 1 ist aus der EP-A-0 417 350 bekannt.

Eine derartige Vorrichtung wird beispielsweise für die Übertragung eines Signals zum Auslösen eines Prallschutzes für Kraftfahrzeuge (Airbag) benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der eingangs erwähnten EP-OS 0 417 350 wird für die Signalübertragung elektrischer Strom verwendet. Die Stromübertragung erfolgt durch eine beispielsweise nach Art eines Federhauses zu einem Wickelkörper gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Die Windungen der FBL gleiten dabei auf den sie begrenzenden Flächen von Stator und/oder Rotor. Das führt zu Geräuschen, die stören können. Um derartige Geräusche zu unterdrücken, sind bei dieser bekannten Vorrichtung die Flächen, an denen die FBL entlanggleitet, mit einem textilen Dämmstoff versehen. Das erfordert nicht nur zusätzliches Material, sondern auch einen zusätzlichen Arbeitsgang zur Anbringung des Dämmstoffs.

Der Erfindung liegt die Aufgabe zugrunde, die eingangs geschilderte Vorrichtung so weiterzubilden, daß eine störende Geräuschbildung bei der Bewegung der FBL in der Kassette ohne zusätzliche Materialien und Arbeitsgänge vermieden ist.

Diese Aufgabe wird gemäß der Erfindung dadurch gelöst,
- daß zumindest die den Raum, in dem die Leitung untergebracht ist, begrenzenden, rechtwinklig zur Achse des Wickelkörpers verlaufenden Flächen der Kassette über ihre ganze Oberfläche verteilt mit einer Vielzahl von voneinander getrennten Vertiefungen ausgerüstet sind.

Die FBL liegt bei eingebauter Kassette durch ihr Eigengewicht zumindest an einer Fläche ihres Aufnahmeraums an. Das ist im Normalfall eine Fläche des Stators. Beim Bewegen der FBL gleitet dieselbe zwangsläufig an bzw. auf dieser Fläche. Gleitgeräusche an sich sind also nicht zu vermeiden. Die dadurch entstehenden Schallwellen werden bei dieser Vorrichtung durch die vielen Vertiefungen in den den Aufnahmeraum begrenzenden Flächen so oft reflektiert und gebrochen, daß sie stark gedämpft werden und daher nicht mehr nach außen dringen können. Die Vertiefungen können bei der Herstellung von Stator und Rotor mit ausgeformt werden. Sie sind damit integrale Bestandteile dieser beiden Bauteile. Es werden also weder zusätzliche Materialien noch zusätzliche Arbeitsgänge beim Zusammenbau der Kassette benötigt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 eine Ansicht einer Kassette mit einer Vorrichtung nach der Erfindung in schematischer Darstellung.
Fig. 2 einen Querschnitt durch die Kassette.
Fig. 3 eine Einzelheit der Kassette in vergrößerter Darstellung.
Fig. 4 und 5 weitere Einzelheiten in nochmals vergrößerter Darstellung.

Die Erfindung wird im folgenden für eine Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden. Stellvertretend für alle anderen Möglichkeiten wird im folgenden von einer FBL mit elektrischen Leitern ausgegangen.

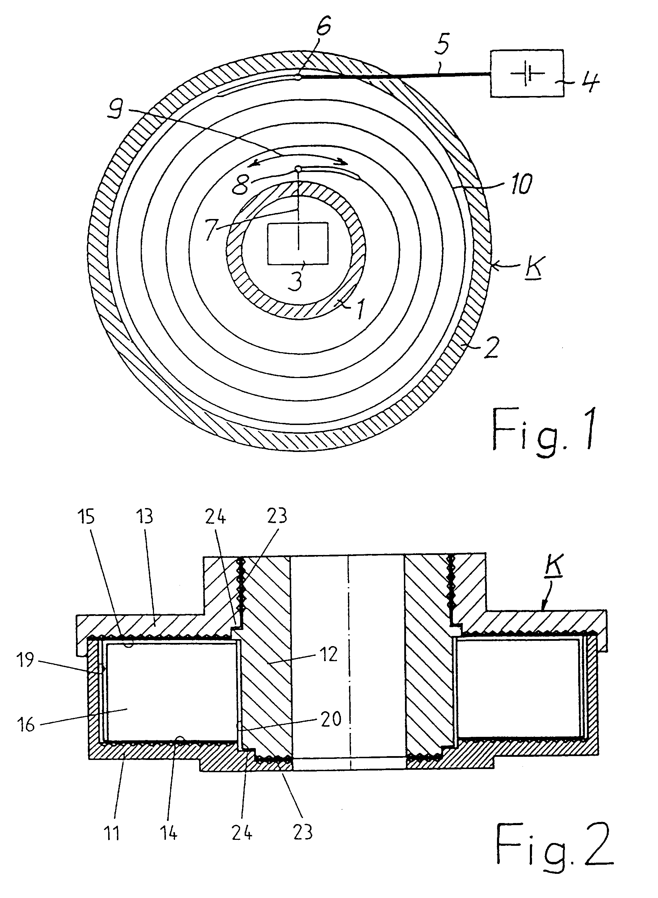

In Fig. 1 sind schematisch zwei beispielsweise kreisförmig ausgebildete Wände 1 und 2 einer Kassette K dargestellt. Sie ist für den Einbau in das Lenkrad eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickelkörpers verkleinert bzw. vergrößert.

Die Kassette K besteht bei der in Fig. 2 dargestellten Ausführungsform aus einem Stator 11, einem Rotor 12 und einem Deckel 13. Der Deckel 13 kann Teil des Stators 11 aber auch Teil des Rotors 12 sein. Er begrenzt den Raum, in dem die FBL 10 untergebracht ist. Die Flächen 14 des Stators 11 und 15 des Deckels 13 verlaufen im rechten Winkel zur Achse des schematisch angedeuteten Wickelkörpers 16 der FBL 10. Sie begrenzen dessen Aufnahmeraum. Die Endstelle 6 liegt bei dieser Kassette K im Stator 11, während die Endstelle 8 mit dem Rotor 12 bewegt wird. Bei dieser Bewegung ändert der aus den Windungen der FBL 10 bestehende Wickelkörper 16 seinen Durchmesser. Die Windungen desselben gleiten dabei zumindest auf der inneren Fläche 14 des Stators 11. Dadurch können Geräusche entstehen, die dann stören, wenn sie aus der Kassette K herausgelangen.

Um das zu vermeiden, ist zumindest in den Flächen 14 des Stators 11 und 15 des Deckels 13 eine Vielzahl von voneinander getrennten Vertiefungen 17 angebracht. Die Vertiefungen 17 sind auf der ganzen Oberfläche der Flächen 14 und 15 verteilt. Sie liegen vorzugsweise dicht an dicht.

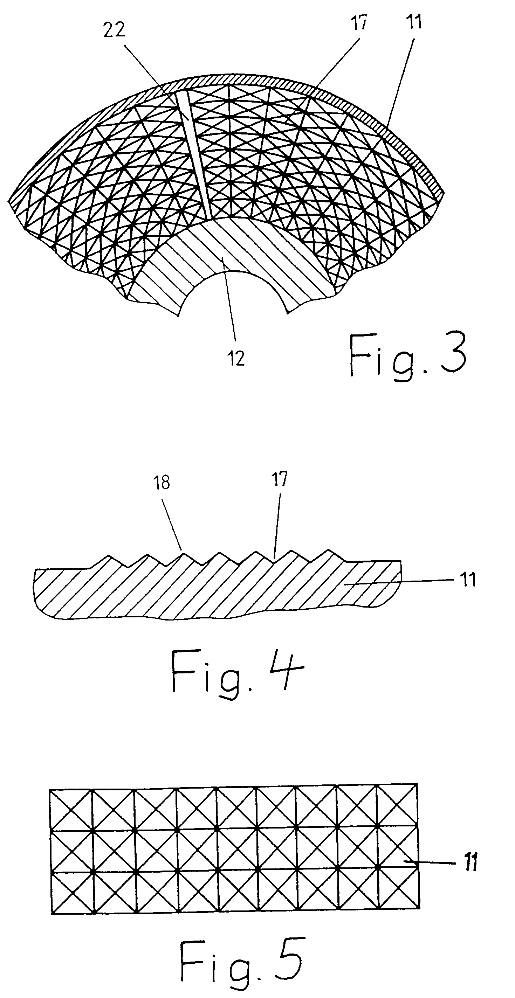

In bevorzugter Ausführungsform sind die Vertiefungen 17 pyramidenförmig ausgeführt. Sie laufen entsprechend Fig. 4 spitz zu und es werden zwischen je zwei Vertiefungen 17 pyramidenförmige, spitze Erhebungen 18 gebildet. Es ergibt sich dadurch für die Flächen 14 und 15 eine Art Wabenstruktur, so wie es in Fig. 5 angedeutet ist. Die beim Schleifen der Windungen der FBL 10 auf ihrer Unterlage entstehenden Geräusche bzw. Schallwellen werden durch die Vertiefungen 17 so oft reflektiert und gebrochen und dadurch gedämpft, daß sie nicht mehr stören.

Die Vertiefungen 17 können auch eine andere geometrische Form als die Form einer Pyramide haben. Sie könnten auch als konzentrische Ringe ausgeführt sein. Auch in den Wänden 19 und 20 von Stator 11 und Rotor 12 könnten Vertiefungen 17 angebracht sein. Für die Wände 19 und 20 bieten sich aus formtechnischen Gründen axial verlaufende Vertiefungen an.

Auch alle anderen zwischen Stator 11 und Rotor 12 bzw. zwischen Deckel 13 und Rotor 12 bestehenden Flächen 23 können mit Vertiefungen 17 ausgerüstet sein. Dadurch können die an den Lager- bzw. Gleitflächen 24 entstehenden Schleifgeräusche gedämmt werden. Nur die Lager- bzw. Gleitflächen 24 müssen erhalten bleiben.

Zumindest an der Fläche 14 des Stators 11 werden zweckmäßig radial verlaufende, nicht unterbrochene Rippen 22 angebracht, die über die Spitzen der Erhebungen 18 hinausragen. Die Rippen 22 sind gegeneinander in Umfangsrichtung der Kassette K versetzt. Es sollen mindestens drei um jeweils 120° gegeneinander versetzte Rippen 22 vorhanden sein. Sie dienen als Auflageflächen für den Wickelkörper 16. Auch an der Fläche 15 des Deckels 13 können solche Rippen angebracht sein.

## Patentansprüche

1. Vorrichtung zur Signalübertragung zwischen zwei Endstellen (6,8), zwischen denen eine in Windungen verlaufende, einen Wickelkörper (16) bildende und in einer im wesentlichen Kreisförmigen Kassette (K) untergebrachte Leitung (10) angeordnet ist, an die weiterführende Leitungen (5,7) an den beiden Endstellen (6,8) anschließbar sind, wobei die Länge der Leitung 10 wesentlich größer als der Abstand der beiden Endstellen (6,8) voneinander ist und mindestens eine der beiden Endstellen (6,8) relativ zu der anderen bewegbar ist, wobei die Kassette (K) aus einem um ihre Achse drehbaren Rotor (12) und einem den Wickelkörper (16) der Leitung (10) aufnehmenden, feststehenden Stator (11) besteht, und wobei in dem den Wickelkörper (16) der Leitung (10) aufnehmenden Raum der Kassette (K) der Geräuschdämmung dienende Elemente (17) vorgesehen sind, dadurch gekennzeichnet, daß zumindest die den Raum, in dem die Leitung (10) untergebracht ist, begrenzenden, rechtwinklig zur Achse des Wickelkörpers (16) verlaufenden Flächen (14,15) der Kassette (K), über ihre ganze Oberfläche verteilt, mit einer Vielzahl von voneinander getrennten Vertiefungen (17) ausgerüstet sind.

2. Vorrichtung nach Anspruch 1, dadurch gekennzeichnet, daß an den die Vertiefungen (17) aufweisenden Flächen (14,15) nicht unterbrochene, in radialer Richtung verlaufende Rippen (22) angebracht sind.

3. Vorrichtung nach Anspruch 1 oder 2, dadurch gekennzeichnet, daß in allen zwischen Stator (11) bzw. Deckel (13) und Rotor (12) liegenden Flächen (23), mit Ausnahme der Lager- bzw. Gleitflächen (24), voneinander getrennte Vertiefungen angebracht sind.

4. Vorrichtung nach einem der Ansprüche 1 bis 3, dadurch gekennzeichnet, daß die Vertiefungen (17) pyramidenförmig ausgeführt sind.

5. Vorrichtung nach einem der Ansprüche 1 bis 4, dadurch gekennzeichnet, daß die Vertiefungen (17) dicht an dicht liegen.

## Claims

1. A device for signal transmission between two terminals (6,8), between which a line (10) running in windings and forming a coil form (16) is arranged in a box (K) being circular in the main, to said line (10) connecting lines (5,7) are connectable at both terminals (6,8), wherein the length of the line (10) is essentially larger than the distance between the both terminals (6,8), and at least one of the terminals (6,8) being movable relatively to the other, wherein the box (K) has a rotor (12) being rotatable around the axis of the box (K) and a fixed stator (11) taking up the coil form (16) of the line (10) and wherein elements (17) for soundproofing are provided in the part of the box (K) taking up the coil form (16) of the line (10), characterized in that at least the areas (14,15) of the box (K) limiting the part in which the line (10) is placed and running rectangular to the axis of the coil form (16) on their whole surface are equipped with deepenings (17) being separated from each other.

2. A device according to claim 1, characterized in that the areas (14,15) with the deepenings (17) are equipped with noninterrupted ribs (22) which run in the radial direction.

3. A device according to claim 1 or 2, characterized in that all areas (23) between the stator (11) or cover (13) respectively and the rotor (12) are equipped with seperated deepenings, except the bearing and gliding surfaces (24).

4. A device according to one of the claims 1 to 3, characterized in that the deepenings (17) are formed pyramidally.

5. A device according to one of the claims 1 to 4, characterized in that the deepenings (17) are closely spaced.

## Revendications

1. Dispositif de transmission de signaux entre deux positions d'extrémité (6, 8) entre lesquelles est disposé un conducteur (10) s'étendant en spires, formant un élément bobiné (16) et logé dans une cassette (K) de forme sensiblement circulaire, aux deux positions d'extrémité (6, 8) duquel peuvent se raccorder des conducteurs (5, 7) conduisant plus loin, dispositif dans lequel la longueur du conducteur (10) est sensiblement supérieure à la distance, l'une de l'autre, des deux positions d'extrémité (6, 8) et au moins l'une des deux positions d'extrémité (6, 8) est mobile par rapport à l'autre, dans lequel la cassette (K) est constituée d'un stator (12), qui peut tourner autour de l'axe de la cassette, et d'un rotor (11) fixe, qui reçoit l'élément bobiné (16) du conducteur (10), et dans lequel des éléments (17) servant à amortir le bruit sont prévus dans le volume de la cassette (K) qui reçoit l'élément bobiné (16) du conducteur (10), caractérisé par le fait qu'au moins les surfaces (14, 15) de la cassette (K) qui limitent le volume dans lequel est logé le conducteur (10) et sont orientées perpendiculairement à l'axe de l'élément bobiné (16) sont munies, répartis sur toute leur surface, d'une pluralité d'évidements (17) séparés l'un de l'autre.

2. Dispositif selon la revendication 1, caractérisé par le fait que sur les surfaces (14, 15) présentant les évidements (17) sont rapportées des nervures (22), non interrompues, orientées selon la direction radiale.

3. Dispositif selon la revendication 1 ou 2, caractérisé par le fait que sur toutes les surfaces (23) situées entre le stator (11) ou le couvercle (13) et le rotor (12), à l'exception des surfaces de portée ou de glissement (24), sont rapportés des évidements séparés l'un de l'autre.

4. Dispositif selon l'une des revendications 1 à 3, caractérisé par le fait que les évidements (17) sont exécutés en forme de pyramide.

5. Dispositif selon l'une des revendications 1 à 4, caractérisé par le fait que les évidements (17) sont situés côte à côte.
